# EUROPEAN PATENT APPLICATION

(11) **EP 4 756 889 A1**
(43) Date of publication of application: **10.06.2026**
(21) Application number: 24849003.9
(22) Date of filing: 23.07.2024
(51) Int. Cl.: H01M 4/06, H01M 4/40, H01M 4/50, H01M 6/16

(54) **LITHIUM PRIMARY BATTERY**

(30) Priority: 28.07.2023 JP 2023123220
(71) Applicant: Panasonic Intellectual Property Management Co., Ltd., Kadoma-shi, Osaka 571-0057 (JP)
(72) Inventor: SAITO, Kohei, Osaka 571-0057 (JP); TAKEUCHI, Masanobu, Osaka 571-0057 (JP)
(74) Representative: Eisenführ Speiser
(86) International application number: PCT/JP2024/026343
(87) International publication number: WO 2025/028348

(57) **Abstract**

A lithium primary battery includes a positive electrode, a negative electrode, and a nonaqueous electrolyte. The positive electrode includes a positive electrode mixture. The positive electrode mixture contains manganese dioxide and an oxide of a metal Me. The metal Me has a valence of 2 or more, an ionic radius of 0.8 Å or less, and an electronegativity of 1.65 or less. The amount of the oxide of the metal Me contained in the positive electrode mixture is 0.1 parts by mass or more and 5 parts by mass or less relative to 100 parts by mass of the manganese dioxide contained in the positive electrode mixture. The negative electrode includes an alloy containing lithium and magnesium. The content of the lithium in the alloy is greater than 88% by mass. The content of the magnesium in the alloy is 0.01% by mass or more and 10% by mass or less.

## Description

### [Technical Field]

The present disclosure relates to a lithium primary battery.

### [Background Art]

Lithium primary batteries are used as power sources for many electronic devices due to its high energy density and low self-discharge. For positive electrodes of the lithium primary batteries, manganese dioxide is used, for example. For negative electrodes of the lithium primary batteries, sheet-shaped (foil-shaped) metal lithium or a lithium alloy is used, for example.

Patent Literature 1 proposes "a lithium negative electrode in a lithium-organic electrolyte battery in which a lithium salt is dissolved in an electrolyte and a separator is provided opposite the negative electrode, wherein a stack in which a coating layer of an aluminum-magnesium alloy initially stacked on the surface of a lithium body adjoining the separator is used as the negative electrode, and an aluminum-magnesium-lithium ternary alloy is formed by diffusion to increase the surface area of the negative electrode, thereby enhancing the pulse performance of the battery".

Patent Literature 2 proposes "a battery including a negative electrode using a light metal as an active material, an organic electrolyte, and a positive electrode using manganese dioxide as an active material, wherein the positive electrode is obtained by mixing an oxide of an alkaline earth metal".

Patent Literature 3 proposes "a positive electrode for a lithium primary battery, characterized in that at least one metal oxide selected from the group consisting of titanium oxide, alumina, zinc oxide, chromium oxide, lithium oxide, nickel oxide, copper oxide, and iron oxide is dispersed between particles of manganese dioxide".

### [Citation List]

### [Patent Literature]

| | |
|---|---|
| [Patent Literature 1] | Japanese Laid-Open Patent Publication No. S58-209862 |
| [Patent Literature 2] | Japanese Laid-Open Patent Publication No. S56-103864 |
| [Patent Literature 3] | Japanese Laid-Open Patent Publication No. 2003-249213 |

### [Summary of Invention]

### [Technical Problem]

In the lithium primary batteries, the internal resistance may increase after long-term storage to deteriorate discharge characteristics.

### [Solution to Problem]

One aspect of the present disclosure relates to a lithium primary battery including: a positive electrode; a negative electrode; and a nonaqueous electrolyte, wherein the positive electrode includes a positive electrode mixture, the positive electrode mixture contains manganese dioxide and an oxide of a metal Me other than manganese, the metal Me has a valence of 2 or more, an ionic radius of 0.8 Å or less, and an electronegativity of 1.65 or less, an amount of the oxide of the metal Me contained in the positive electrode mixture is 0.1 parts by mass or more and 5 parts by mass or less relative to 100 parts by mass of the manganese dioxide contained in the positive electrode mixture, the negative electrode includes an alloy containing lithium and magnesium, a content of the lithium in the alloy is greater than 88% by mass, and a content of the magnesium in the alloy is 0.01% by mass or more and 10% by mass or less.

### [Advantageous Effects of Invention]

According to the present disclosure, the deterioration in discharge characteristics of the lithium primary battery after long-term storage can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

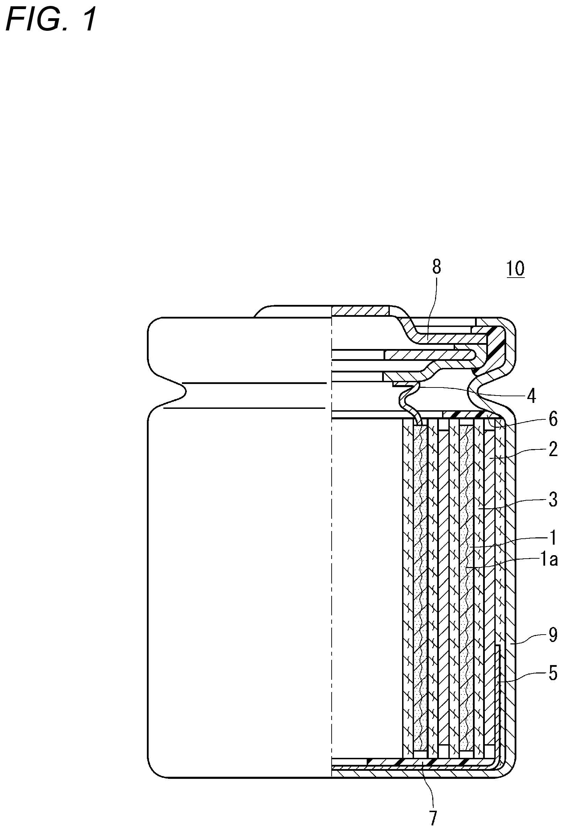

[FIG. 1] FIG. 1 is a front view of a lithium primary battery according to an embodiment of the present disclosure, a part of which is cut away in cross section.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

A lithium primary battery according to an embodiment of the present disclosure includes a positive electrode, a negative electrode, and a nonaqueous electrolyte. The positive electrode includes a positive electrode mixture. The positive electrode mixture contains manganese dioxide (a positive electrode active material) and an oxide (additive) of a metal Me other than manganese. The metal Me has a valence of 2 or more, an ionic radius of 0.8 Å (angstroms) or less, and an electronegativity of 1.65 or less. The amount of the oxide of the metal Me contained in the positive electrode mixture is 0.1 parts by mass or more and 5 parts by mass or less relative to 100 parts by mass of the manganese dioxide contained in the positive electrode mixture. The negative electrode includes an alloy containing lithium (Li) and magnesium (Mg). Hereinafter, the alloy may be also referred to as an "Mg-containing lithium alloy". The content of Li in the lithium alloy is greater than 88% by mass. The content of Mg in the lithium alloy is 0.01% by mass or more and 10% by mass or less.

As a result of the positive electrode mixture containing the oxide of the metal Me, degradation of the nonaqueous electrolyte (decomposition of its solvent) during storage is suppressed, gas generation and an increase in internal resistance due to decomposition of the solvent are suppressed, and deterioration in storage characteristics is suppressed to some extent. A hydroxy group present on the surface of manganese dioxide and a trace amount of water inevitably contained in the nonaqueous electrolyte during manufacturing are implicated in the decomposition of the solvent. However, the storage characteristics are still unsatisfactory, and the present inventor and colleagues accordingly made extensive study for improving the storage characteristics. As a result, it was newly found that when an oxide of a metal Me is contained in a positive electrode mixture and Mg is contained in a lithium alloy of a negative electrode, the deterioration of the storage characteristics is remarkably suppressed.

When the above configuration is satisfied, an increase in internal resistance after long-term storage and deterioration in discharge characteristics (e.g., a decrease in voltage during low-temperature pulsed discharge after storage) associated therewith are suppressed. That is, the deterioration in storage characteristics is suppressed. The detailed mechanism is unclear, but it is inferred as follows. During long-term storage, the metal Me contained in the positive electrode mixture elutes from the positive electrode to precipitate on the negative electrode, and is incorporated into the coating film formed on the surface of the negative electrode as a result of contact between the negative electrode and the nonaqueous electrolyte. At that time, when the dispersibility of the metal Me in the coating film is low, Li ions are less likely to migrate in the coating film, which may increase the negative electrode resistance. By contrast, when the negative electrode (lithium alloy) contains Mg, some interaction occurs between Mg and the metal Me to improve the dispersibility of the metal Me in the coating film, thereby suppressing an increase in negative electrode resistance. It is thought that excellent dispersibility of Mg is implicated in the above interaction.

When the amount of the oxide of the metal Me contained in the positive electrode mixture is less than 0.1 parts by mass relative to 100 parts by mass of the manganese dioxide contained in the positive electrode mixture, the effects by addition of the oxide of the metal Me decrease and the deterioration in storage characteristics is insufficiently suppressed.

When the amount of the oxide of the metal Me contained in the positive electrode mixture is greater than 5 parts by mass relative to 100 parts by mass of the manganese dioxide contained in the positive electrode mixture, the proportion of the oxide of the metal Me in the positive electrode mixture increases, which may increase the positive electrode resistance to lead to the deterioration of the discharge characteristics.

When the Mg content in the lithium alloy is greater than 10% by mass, the proportion of Mg in the negative electrode increases, which may increase the negative electrode resistance to lead to the deterioration of the discharge characteristics.

When the Li content in the lithium alloy is 88% by mass or less, the proportion of Li in the negative electrode deceases, which may increase the negative electrode resistance to lead to the deterioration of the discharge characteristics.

### (Oxide of metal Me)

The metal Me has a valence of 2 or more, an ionic radius of 0.8 Å or less, and an electronegativity of 1.65 or less. When the valence of the metal Me is within the above range, the metal Me having a valence larger than that of Li is present in the coating film. This improves the conductivity of Li ions in the coating film. When the ionic radius and electronegativity of the metal Me are within the above ranges, the migration of lithium ions in the coating film is unlikely to be inhibited due to factors such as small differences in ionic radius and electronegativity from those of Li.

The valence of the metal Me is the valence when the metal Me is present as an oxide of the metal Me. The ionic radius and electronegativity of the metal Me are the Pauling ionic radius and Pauling electronegativity, respectively. One type of the metal Me may be used alone, or two or more types thereof may be used in combination.

The metal Me preferably includes at least one selected from the group consisting of magnesium (Mg), aluminum (Al), titanium (Ti), zinc (Zn), zirconium (Zr), and niobium (Nb). Among these, zinc (Zn) is particularly preferable as the metal Me from the viewpoint that the surface of the manganese dioxide is highly coatable.

The oxide of the metal Me preferably includes at least one selected from the group consisting of MgO, Al₂O₃, TiO₂, ZnO, ZrO₂, and Nb₂O₅. The positive electrode mixture contains positive electrode active material particles, the oxide of the metal Me, and a binder, for example. The positive electrode mixture may contain a composite of the positive electrode active material particles having surfaces coated with the oxide of the metal Me. In order to obtain the composite, compounding may be performed using the positive electrode active material particles and particles of the oxide of the metal Me. Alternatively, the positive electrode mixture may contain a mixture of the positive electrode active material particles and the particles of the oxide of the metal Me. One oxide of the metal Me may be used alone, or two or more thereof may be used in combination.

The amount of the oxide of the metal Me contained in the positive electrode mixture is 0.1 parts by mass or more and 5 parts by mass or less relative to 100 parts by mass of the manganese dioxide contained in the positive electrode mixture, and preferably 0.5 parts by mass or more and 2 parts by mass or less.

When the positive electrode mixture contains MgO and manganese dioxide, the amount of Mg atoms contained in the positive electrode mixture is preferably 0.1 parts by mass or more and 4.8 parts by mass or less relative to 100 parts by mass of Mn atoms contained in the positive electrode mixture, and more preferably 0.48 parts by mass or more and 1.9 parts by mass or less.

When the positive electrode mixture contains Al₂O₃ and manganese dioxide, the amount of Al atoms contained in the positive electrode mixture is preferably 0.08 parts by mass or more and 4.2 parts by mass or less relative to 100 parts by mass of Mn atoms contained in the positive electrode mixture, and more preferably 0.42 parts by mass or more and 1.7 parts by mass or less.

When the positive electrode mixture contains TiO₂ and manganese dioxide, the amount of Ti atoms contained in the positive electrode mixture is preferably 0.095 parts by mass or more and 4.7 parts by mass or less relative to 100 parts by mass of Mn atoms contained in the positive electrode mixture, and more preferably 0.47 parts by mass or more and 1.9 parts by mass or less.

When the positive electrode mixture contains ZnO and manganese dioxide, the amount of Zn atoms contained in the positive electrode mixture is preferably 0.13 parts by mass or more and 6.4 parts by mass or less relative to 100 parts by mass of Mn atoms contained in the positive electrode mixture, and more preferably 0.64 parts by mass or more and 2.5 parts by mass or less.

When the positive electrode mixture contains ZrO₂ and manganese dioxide, the amount of Zr atoms contained in the positive electrode mixture is preferably 0.12 parts by mass or more and 5.9 parts by mass or less relative to 100 parts by mass of Mn atoms contained in the positive electrode mixture, and more preferably 0.59 parts by mass or more and 2.3 parts by mass or less.

When the positive electrode mixture contains Nb₂O₅ and manganese dioxide, the amount of Nb atoms contained in the positive electrode mixture is preferably 0.11 parts by mass or more and 5.5 parts by mass or less relative to 100 parts by mass of Mn atoms contained in the positive electrode mixture, and more preferably 0.55 parts by mass or more and 2.2 parts by mass or less.

In the above cases, Mg, Al, Ti, Zn, Zr, and Nb are derived from MgO, Al₂O₃, TiO₂, ZnO, ZrO₂, and Nb₂O₅, respectively. Mn is derived from the manganese dioxide.

The amount (part by mass) of metal Me atoms contained in the positive electrode mixture can be determined as follows.

The positive electrode mixture is taken out by decomposing a battery in the initial stage (e.g., an unused battery immediately after production or within one week of purchase) and then dissolved in an acidic solution (e.g., hydrochloric acid). The insoluble components are separated, for example, by filtration or centrifugation to obtain a sample solution. The metal Me content WMe (mass%) and Mn content WMn (mass%) in the sample solution are measured by inductively coupled plasma (ICP) emission spectroscopy, and (WMe/WMn) × 100 is determined as the amount (parts by mass) of the metal Me atoms described above. As the measuring device, "iCAP7400 Duo" manufactured by Thermo Fisher Scientific, Inc. can be used, for example.

### (Lithium Alloy)

From the viewpoint of reducing the internal resistance and ensuring the capacity, the Li content in the lithium alloy is more than 88% by mass, and may be 89% by mass or more or 90% by mass or more, or may be 95% by mass or more. The Li content in the lithium alloy may be 99.99% by mass or less. From the viewpoint of suppressing the deterioration in storage characteristics, the Mg content in the lithium alloy is 0.01% by mass or more and 10% by mass or less.

From the viewpoint of improving the storage characteristics, it is preferable that the lithium alloy further contains Al. Hereinafter, a lithium alloy containing Mg and substantially free of Al is also referred to as an "Li-Mg alloy". A lithium alloy containing Mg and Al is also referred to as an "Li-Mg-Al alloy". It should be noted that "substantially free" means less than its limit of detection in compositional analysis (e.g., ICP emission spectroscopy or atomic absorption spectroscopy) of the lithium alloy.

Addition of Al suppresses an increase in internal resistance during storage (during long-term use), but Al tends to segregate in Li. By contrast, Mg has very good dispersibility in Li. When the lithium alloy contains both Mg and Al, segregation of Al is suppressed due to good dispersibility of Li to suppress non-uniform consumption of Al caused due to segregation. In this case, the effects by Mg and Al are stably obtained in the entire negative electrode, and Li is uniformly consumed on the surface of the negative electrode, so that the proportion of Li that can contribute to discharge reaction at the end of discharge increases. When Al is contained together with Mg, a low-resistance coating film tends to be stably formed and the voltage at the end of discharge is further increased. In addition, the deterioration in storage characteristics is further suppressed.

From the viewpoint of suppressing the deterioration in storage characteristics, the Mg content in the lithium alloy is 0.01% by mass or more, preferably 0.2% by mass or more, and more preferably 0.5% by mass or more. From the viewpoint of reducing the negative electrode resistance, the Mg content in the lithium alloy is 10% by mass or less, preferably 5% by mass or less, and more preferably 2% by mass or less. The Mg content in the lithium alloy may be in the range of, for example, 0.2% by mass or more and 5% by mass or less, or 0.5% by mass or more and 2% by mass or less. The Mg content in the lithium alloy is the Mg content in the Li-Mg alloy or the Li-Mg-Al alloy.

From the viewpoint of suppressing the deterioration in storage characteristics, the Al content in the lithium alloy (Li-Mg-Al alloy) is preferably 0.01% by mass or more (or 0.1% by mass or more) and 5% by mass or less, and more preferably 0.1% by mass or more and 4% by mass or less (or 3% by mass or less). From the same viewpoint as above, the total content of Mg and Al in the Li-Mg-Al alloy is preferably 0.02% by mass or more and 10% by mass or less. The molar ratio: Mg/Al of Mg to Al may be in the range of 0.02 or more and 3 or less, for example.

The lithium alloy may contain another metal element other than Li, Mg, and Al. Examples of the other metal element include Sn, Ni, Pb, In, Na, K, and Ca.

The composition of the lithium alloy can be determined by inductively coupled plasma (ICP) emission spectroscopy or atomic absorption spectroscopy (AAS).

Hereinafter, the lithium primary battery of the present disclosure is described in more detail.

### [Lithium Primary Battery]

### (Positive Electrode)

The positive electrode includes a positive electrode mixture. The positive electrode mixture contains manganese dioxide as a positive electrode active material. The positive electrode containing manganese dioxide exhibits a relatively high voltage and is excellent in pulse discharge characteristics. As the manganese dioxide, a sintered product of electrolytic manganese dioxide is suitably used. The manganese dioxide may be in a mixed crystal state including multiple types of crystal states. The positive electrode may contain a manganese oxide other than manganese dioxide. Examples of the manganese oxide other than manganese dioxide include MnO, Mn₃O₄, Mn₂O₃, and Mn₂O₇. Preferably, manganese dioxide is the main component among the manganese oxides contained in the positive electrode.

The manganese dioxide contained in the positive electrode may be doped with a small amount of lithium. When the amount of the lithium doped is small, a high capacity can be ensured. The manganese dioxide and manganese dioxide doped with a small amount of lithium can be represented by LiₓMnO₂ (0 ≤ x ≤ 0.05). The average composition of the entire manganese oxide contained in the positive electrode may be represented by LiₓMnO₂ (0 ≤ x ≤ 0.05). The ratio x of Li may be 0.05 or less in the initial discharge state of the lithium primary battery. The ratio x of Li generally increases with the progress of discharging of the lithium primary battery. The oxidation number of the manganese contained in the manganese dioxide is theoretically +4. However, when the positive electrode contains another manganese oxide or the manganese dioxide is doped with lithium, the oxidation number of the manganese may increase or decrease to some extent from +4. Therefore, the average oxidation number of the manganese in LiₓMnO₂ is allowed to increase or decrease to some extent from +4.

The positive electrode can contain another positive electrode active material that is used for lithium primary batteries, in addition to manganese dioxide. One example of the other positive electrode active material is graphite fluoride. The proportion of the manganese dioxide to the entire positive electrode active material is preferably 90% by mass or more.

As the manganese dioxide, electrolytic manganese dioxide is preferably used. Adjustment of conditions for sintering can increase the crystallinity of the manganese dioxide and reduce the specific surface area of the electrolytic manganese dioxide. The BET specific surface area of the manganese dioxide may be 5 m²/g or more and 40 m²/g or less. When the BET specific surface area of the manganese dioxide is within the above range, self-discharge can be suppressed and the deterioration in pulse discharge characteristics after storage can be further suppressed.

The BET specific surface area of the manganese dioxide may be measured by a known method, and is measured based on the BET method using, for example, a specific surface area measuring device manufactured by, for example, Mountech Co., Ltd. For example, the manganese dioxide separated from the positive electrode taken out of the battery may be used as a sample for measurement.

The median value of the particle diameters of the manganese dioxide may be 5 µm or more and 40 µm or less. When the median value of the particle diameters is within the above range, self-discharge can be suppressed and the deterioration in pulse discharge characteristics after storage can be further suppressed.

The median value of the particle diameters of the manganese dioxide is the median value in the particle size distribution determined by quantitative laser diffractometry and scattering (qLD method), for example. For example, the manganese dioxide separated from the positive electrode taken out of the battery may be used as a sample for measurement. For example, "SALD-7500 nano" manufactured by Shimadzu Corporation is used for measurement.

The positive electrode mixture can contain a binder in addition to the positive electrode active material and the oxide of the metal Me. The positive electrode mixture may contain a conductive agent.

Examples of the binder include fluorocarbon resins, rubber particles, and acrylic resins.

Examples of the conductive agent include conductive carbon materials. Examples of the conductive carbon materials include natural graphite, artificial graphite, carbon black, and carbon fibers.

The positive electrode can further include a positive electrode current collector holding the positive electrode mixture. Examples of the material of the positive electrode current collector include stainless steel, aluminum, and titanium.

In the case of a coin-shaped battery, a ring-shaped positive electrode current collector having an L shape in cross section may be attached to a positive electrode mixture pellet to form the positive electrode. Alternatively, the positive electrode may be composed of only the positive electrode mixture pellet. The positive electrode mixture pellet is obtained, for example, by compression-molding a wet positive electrode mixture prepared by adding an appropriate amount of water to the positive electrode active material and an additive, followed by drying.

In the case of a cylindrical battery, a positive electrode including a sheet-shaped positive electrode current collector and a positive electrode mixture layer held by the positive electrode current collector can be used. As the sheet-shaped positive electrode current collector, a perforated current collector is preferable. Examples of the perforated current collector include expanded metal, net, and punching metal. The positive electrode mixture layer is obtained, for example, by applying the aforementioned wet positive electrode mixture to the surface of a sheet-shaped positive electrode current collector or filling it into the positive electrode current collector, applying pressure in the thickness direction, and drying.

The positive electrode preferably includes a perforated current collector such as that described above and the positive electrode mixture filled in the current collector. In particular, a current collector containing at least one material selected from the group consisting of SUS444, SUS430, and SUS316 is preferably used. Use of such a current collector can suppress side reaction between the nonaqueous electrolyte and the current collector and corrosion of the current collector in the lithium primary battery, and also suppress an increase in internal resistance and gas generation. In particular, when such a current collector is used in combination with a nonaqueous electrolyte containing at least one of LiCF₃SO₃ and LiClO₄, which are typically used in lithium primary lithium batteries as lithium salts, the side reaction between the current collector and the nonaqueous electrolyte can be suppressed more effectively. The thickness of the positive electrode is 300 µm or more and 900 µm or less, for example.

### (Negative Electrode)

The negative electrode can include, for example, a foil-shaped (sheet-shaped) lithium alloy. The lithium alloy is formed into any shape and thickness according to, for example, the shape, dimension, and standard performance of the lithium primary battery.

In the case of a cylindrical battery, the negative electrode may include a negative electrode current collector (e.g., a copper foil) supporting the lithium alloy, but may be a foil-shaped (sheet-shaped) lithium alloy without a negative electrode current collector. When the lithium alloy contains Mg, relatively strong Mg remains at the end of discharge. Therefore, the negative electrode can be formed using only a foil-shaped (sheet-shaped) lithium alloy without using a negative electrode current collector. Use of an Mg-containing lithium alloy reduces fractures or partial losses of the negative electrode at the end of discharge when the negative electrode does not include a negative electrode current collector. The shape of the negative electrode (lithium alloy) is maintained even at the end of discharge, and the conductivity of the entire negative electrode is ensured even when a negative electrode current collector is not used.

In the case of a coin-shaped battery, the negative electrode may be formed by punching a hoop-shaped lithium alloy into a disk shape. In the case of a cylindrical battery, a sheet-shaped lithium alloy may be used as the negative electrode. The sheet is obtained, for example, by extrusion. More specifically, a lithium alloy foil or the like having a shape extending in the longitudinal direction and the lateral direction is used in the cylindrical battery.

### (Nonaqueous Electrolyte)

As the nonaqueous electrolyte, a solution obtained by dissolving a lithium salt as a solute in a nonaqueous solvent is used.

Examples of the nonaqueous solvent include organic solvents that may be typically used for nonaqueous electrolytes of lithium primary batteries. Examples of the nonaqueous solvents include ethers, esters, and carbonate esters. As the nonaqueous solvent, dimethyl ether, γ-butyrolactone, propylene carbonate, ethylene carbonate, or 1,2-dimethoxyethane can be used, for example. The nonaqueous electrolyte may contain one nonaqueous solvent or may contain two or more nonaqueous solvents.

From the viewpoint of improving the discharge characteristics of the lithium primary battery, the nonaqueous solvent preferably contains a cyclic carbonate having a higher boiling point and a chain ether having a lower viscosity even at low temperatures. The cyclic carbonate preferably includes at least one selected from the group consisting of propylene carbonate (PC) and ethylene carbonate (EC), with PC being particularly preferable. The chain ether preferably has a viscosity of 1 mPa·s or lower at 25°C, and particularly preferably includes dimethoxyethane (DME). The viscosity of the nonaqueous solvent is determined by measurement at 25°C using a microsample viscometer m-VROC manufactured by RheoSense, Inc. at a shear rate of 10,000(1/s).

Examples of the lithium salt include LiCF₃SO₃, LiClO₄, LiBF₄, LiPF₆, LiRaSO₃ (Ra is a fluorinated alkyl group having 1 to 4 carbon atoms), LiFSO₃, LiN(SO₂Rb)(SO₂Rc) (Rb and Rc are each independently a fluorinated alkyl group having 1 to 4 carbon atoms), and LiN(FSO₂)₂). One lithium salt may be used alone, or two or more lithium salts may be used in combination.

The concentration of lithium ions (total concentration of lithium salt(s)) contained in the nonaqueous electrolyte is, for example, 0.2 mol/L or higher and 2.0 mol/L or lower, and may be 0.3 mol/L or higher and 1.5 mol/L or lower.

The nonaqueous electrolyte may contain an additive, as necessary. Examples of such an additive include phthalimide, N-substituted phthalimide compounds, dimethyl phthalate, phthalate ester compounds, propane sultone, and vinylene carbonate. The total concentration of such additive(s) contained in the nonaqueous electrolyte is 0.003 to 5 mol/L, for example.

### (Separator)

The lithium primary battery usually includes a separator provided between the positive electrode and the negative electrode. As the separator, a porous sheet made of an insulative material that is resistant to the internal environment of the lithium primary battery may be used. Specific examples thereof include a nonwoven fabric made of a synthetic resin, a microporous film made of a synthetic resin, and a laminate thereof.

Examples of the synthetic resin used in the nonwoven fabric include polypropylene, polyphenylene sulfide, and polybutylene terephthalate. Examples of the synthetic resin used in the microporous film include polyolefin resins such as polyethylene, polypropylene, and ethylene-propylene copolymers. The microporous film may contain inorganic particles, as necessary.

The thickness of the separator is 5 µm or more and 100 µm or less, for example.

The configuration of the lithium primary battery is not particularly limited. The lithium primary battery may be a coin-shaped battery including a stacked electrode group formed by stacking a disk-shaped positive electrode and a disk-shaped negative electrode stack with a separator therebetween, or may be a cylindrical battery including a wound electrode group formed by spirally winding a band-shaped positive electrode and a band-shaped negative electrode with a separator therebetween.

FIG. 1 is a front view of a cylindrical lithium primary battery according to an embodiment of the present disclosure, a part of which is cut away in cross section. In a lithium primary battery 10, an electrode group in which a positive electrode 1 and a negative electrode 2 are wound with a separator 3 therebetween is housed in a battery case 9 together with a nonaqueous electrolyte (not illustrated). A sealing plate 8 is attached to the opening of the battery case 9. A positive electrode lead 4 connected to a current collector 1a of the positive electrode 1 is connected to the sealing plate 8. A negative electrode lead 5 connected to the negative electrode 2 is connected to the case 9. Furthermore, an upper insulation plate 6 and a lower insulation plate 7 are provided on the upper and lower parts of the electrode group, respectively, to prevent internal short circuits.

### <<Supplemental Note>>

According to the above description of the embodiments, the following techniques are disclosed.

### (Technique 1)

A lithium primary battery including:
a positive electrode; a negative electrode; and a nonaqueous electrolyte,
wherein the positive electrode includes a positive electrode mixture,
the positive electrode mixture contains manganese dioxide and an oxide of a metal Me other than manganese,
the metal Me has a valence of 2 or more, an ionic radius of 0.8 Å or less, and an electronegativity of 1.65 or less,
an amount of the oxide of the metal Me contained in the positive electrode mixture is 0.1 parts by mass or more and 5 parts by mass or less relative to 100 parts by mass of the manganese dioxide contained in the positive electrode mixture,
the negative electrode includes an alloy containing lithium and magnesium,
a content of the lithium in the alloy is greater than 88% by mass, and
a content of the magnesium in the alloy is 0.01% by mass or more and 10% by mass or less.

### (Technique 2)

The lithium primary battery according to Technique 1, wherein the alloy contains aluminum, and
a total content of the magnesium and the aluminum in the alloy is 0.02% by mass or more and 10% by mass or less.

### (Technique 3)

The lithium primary battery according to Technique 1 or 2, wherein the metal Me includes at least one selected from the group consisting of magnesium, aluminum, titanium, zinc, zirconium, and niobium.

### (Technique 4)

The lithium primary battery according to any one of Techniques 1 to 3, wherein a median value of particle diameters of the manganese dioxide is 5 µm or more and 40 µm or less.

### (Technique 5)

The lithium primary battery according to any one of Techniques 1 to 4, wherein a BET specific surface area of the manganese dioxide is 5 m²/g or more and 40 m²/g or less.

### [Examples]

Hereinafter, the present disclosure is specifically described based on Examples and Comparative Examples. However, the present disclosure is not limited to Examples described below.

### (Positive Electrode Production)

Compounding was performed by mixing a sintered electrolytic manganese dioxide and an oxide of a metal Me. For the compounding, a dry particle compounding machine "NOBILTA NOB-130" manufactured by HOSOKAWA MICRON CORPORATION was used. In the manner described above, a composite material was obtained in which the surfaces of particles of the manganese dioxide were covered with the oxide of the metal Me. As the metal Me, any of the metal elements shown in tables was used. MgO, Al₂O₃, TiO₂, ZnO, ZrO₂, Nb₂O₅, Y₂O₃, MoO₃, CdO, or In₂O₃ was used as the oxide of the metal Me.

To 100 parts by mass of a positive electrode active material, 3 parts by mass of Ketjen Black being a conductive agent, 5 parts by mass of polytetrafluoroethylene being a binder, and an appropriate amount of pure water were added and kneaded to prepare a wet positive electrode mixture. As the positive electrode active material, the composite material obtained above or a sintered electrolytic manganese dioxide was used.

The content of the oxide of the metal Me in the positive electrode mixture was as shown in the tables. The column titled "Amount of oxide of metal Me" under "Positive electrode mixture" in the tables indicates the amounts (parts by mass) thereof relative to 100 parts by mass of the manganese dioxide contained in the positive electrode mixture. Accordingly, the amounts of metal Me atoms in the positive electrode mixture were as shown in the tables. The column titled "Amount of metal Me atoms" under "Positive electrode mixture" in the tables indicate the amounts (part by mass) relative to 100 parts by mass of manganese atoms contained in the positive electrode mixture. The metal Me atoms are derived from the oxide of the metal Me, and the manganese atoms are derived from the manganese dioxide.

Next, a positive electrode precursor was produced by filling a positive electrode current collector formed of expanded metal made of stainless steel (SUS444) and having a thickness of 0.4 mm with the positive electrode mixture. The positive electrode precursor was then dried, rolled by roll pressing to have a thickness of 0.5 mm, and cut to a predetermined size. This resulted in a positive electrode. Subsequently, a part of the filled positive electrode mixture was peeled off, and one end of a stainless-steel positive electrode lead was resistance welded to the exposed part of the positive electrode current collector.

### (Negative Electrode Production)

A negative electrode was obtained by cutting a lithium metal foil or a lithium alloy foil (200 µm thick) to a predetermined size. One end of a nickel-made negative electrode lead was connected to a predetermined location of the negative electrode by ultrasonic welding. Element(s) other than Li contained in the lithium alloy foil was/were either or both Mg and Al. The Mg content and Al content in the lithium alloy foil were as indicated in the tables. "-" in the column titled "Mg content (or Al content)" in the tables means that the amount of Mg (or Al) is less than the limit of detection in compositional analysis (e.g., ICP emission spectroscopy).

### (Electrode Group Production)

The positive electrode and the negative electrode were wound with a separator therebetween to produce an electrode group. As the separator, a microporous film made of polypropylene and having a thickness of 25 µm was used.

### (Nonaqueous Liquid Electrolyte Preparation)

Propylene carbonate (PC), ethylene carbonate (EC), and 1,2-dimethoxyethane (DME) were mixed in a volume ratio of 4:2:4 to obtain a nonaqueous solvent. LiCF₃SO₃ was dissolved in the nonaqueous solvent at a concentration of 0.5 mol/L to prepare a nonaqueous electrolyte.

### (Lithium Primary Battery Assembly)

The electrode group was housed in a cylindrical battery case serving also as a negative electrode terminal. As the battery case, an iron case (outer diameter 17 mm, height 45.5 mm) was used. The nonaqueous electrolyte was then injected into the battery case, and the opening of the battery case was closed with a metal-made sealing plate serving also as a positive electrode terminal. The other end of the positive electrode lead was connected to the sealing plate, and the other end of the negative electrode lead was connected to the inner bottom of the battery case. In the manner described above, cylindrical lithium primary batteries were produced. The batteries immediately after assembly were discharged at 2.4 A for 2 minutes and then aged in an atmosphere at 45°C for 7 days. The positive electrode active material after the aging was represented by the formula LiₓMnO₂, and the value x indicating the amount of lithium doped was in the range of 0 < x ≤ 0.05.

LiₓMnO₂ contained in the positive electrode mixture had a median value of the particle diameters of 21 to 23 µm and a BET specific surface area of 14 to 15 m²/g.

In the tables, A1-1 to A1-16, A2-1 to A2-16, A3-1 to A3-16, A4-1 to A4-16, A5-1 to A5-16, A6-1 to A6-16, and A7-1 to A7-3 are batteries of Examples. In the tables, B1-1 to B1-7, B2-1 to B2-7, B3-1 to B3-7, B4-1 to B4-7, B5-1 to B5-7, and B6-1 to B6-7 are batteries of Comparative Examples. In the tables, R1-1 to R1-3, R2-1, R2-3, R3-1 to R3-3, R4-1 to R4-3, and R5-1 to R5-3 are batteries of Comparative Examples.

### [Evaluation]

### (Internal Resistances of Batteries after Storage)

The batteries after the aging were stored at 70°C for 4 months. The internal resistances of the batteries after the storage were measured in an environment at 20°C.

### (Low-Temperature Pulse discharge Test on Batteries after Storage)

The batteries after the aging were stored at 70°C for 4 months. After the storage, the batteries were left to stand in an environment at -30°C for 2 hours, and then subjected to pulsed discharge at 300 mA in an environment at -30°C for 1 second. The lowest voltage at that time was determined as a pulsed discharge voltage.

The evaluation results are shown in Table 1 to 13. In Tables 1 to 13, the internal resistances are expressed as relative values, where the internal resistance of the battery B1-2 is defined as 100. The pulsed discharge voltages are expressed as relative values, where the pulsed discharge voltage of the battery B1-2 is defined as 100. A7-1 to A7-3 shown in Table 13 are Examples where oxides of two types of metal Me (composite materials in which the surfaces of particles of the manganese dioxide are covered with the respective oxides of two types of metal Me) are used.

**[Table 1]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| R1-1 | - | - | - | Not added | - | Li | - | - | - | 112 | 88 |
| R1-2 | - | - | - | Not added | - | Li-Al | - | 0.5 | 0.5 | 110 | 90 |
| R1-3 | - | - | - | Not added | - | Li-Mg | 0.5 | - | 0.5 | 107 | 93 |
| R2-1 | Y | 0.93 | 1.22 | 1 | 1.2 | Li | - | - | - | 107 | 93 |
| R2-2 | Y | 0.93 | 1.22 | 1 | 1.2 | Li-Al | - | 0.5 | 0.5 | 106 | 94 |
| R2-3 | Y | 0.93 | 1.22 | 1 | 1.2 | Li-Mg | 0.5 | - | 0.5 | 99 | 101 |
| R3-1 | Mo | 0.66 | 2.16 | 1 | 1.1 | Li | - | - | - | 108 | 92 |
| R3-2 | Mo | 0.66 | 2.16 | 1 | 1.1 | Li-Al | - | 0.5 | 0.5 | 107 | 93 |
| R3-3 | Mo | 0.66 | 2.16 | 1 | 1.1 | Li-Mg | 0.5 | - | 0.5 | 100 | 100 |
| R4-1 | Cd | 0.97 | 1.69 | 1 | 1.4 | Li | - | - | - | 110 | 90 |
| R4-2 | Cd | 0.97 | 1.69 | 1 | 1.4 | Li-Al | - | 0.5 | 0.5 | 111 | 89 |
| R4-3 | Cd | 0.97 | 1.69 | 1 | 1.4 | Li-Mg | 0.5 | - | 0.5 | 108 | 92 |
| R5-1 | In | 0.81 | 1.78 | 1 | 1.3 | Li | - | - | - | 110 | 90 |
| R5-2 | In | 0.81 | 1.78 | 1 | 1.3 | Li-Al | - | 0.5 | 0.5 | 109 | 91 |
| R5-3 | In | 0.81 | 1.78 | 1 | 1.3 | Li-Mg | 0.5 | - | 0.5 | 107 | 93 |

**[Table 2]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| B1-1 | Mg | 0.65 | 1.31 | 1 | 0.95 | Li | - | - | - | 102 | 98 |
| B1-2 | Mg | 0.65 | 1.31 | 1 | 0.95 | Li-Al | - | 1 | 1 | 100 | 100 |
| A1-1 | Mg | 0.65 | 1.31 | 1 | 0.95 | Li-Mg | 1 | - | 1 | 78 | 122 |
| A1-2 | Mg | 0.65 | 1.31 | 1 | 0.95 | Li-Mg-Al | 1 | 1 | 2 | 75 | 125 |
| B2-1 | Al | 0.50 | 1.61 | 1 | 0.84 | Li | - | - | - | 101 | 99 |
| B2-2 | Al | 0.50 | 1.61 | 1 | 0.84 | Li-Al | - | 1 | 1 | 99 | 101 |
| A2-1 | Al | 0.50 | 1.61 | 1 | 0.84 | Li-Mg | 1 | - | 1 | 77 | 123 |
| A2-2 | Al | 0.50 | 1.61 | 1 | 0.84 | Li-Mg-Al | 1 | 1 | 2 | 74 | 126 |
| B3-1 | Ti | 0.68 | 1.54 | 1 | 0.95 | Li | - | - | - | 103 | 97 |
| B3-2 | Ti | 0.68 | 1.54 | 1 | 0.95 | Li-Al | - | 1 | 1 | 101 | 99 |
| A3-1 | Ti | 0.68 | 1.54 | 1 | 0.95 | Li-Mg | 1 | - | 1 | 79 | 121 |
| A3-2 | Ti | 0.68 | 1.54 | 1 | 0.95 | Li-Mg-Al | 1 | 1 | 2 | 75 | 125 |

**[Table 3]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| B4-1 | Zn | 0.74 | 1.65 | 1 | 1.3 | Li | - | - | - | 100 | 100 |
| B4-2 | Zn | 0.74 | 1.65 | 1 | 1.3 | Li-Al | - | 1 | 1 | 98 | 102 |
| A4-1 | Zn | 0.74 | 1.65 | 1 | 1.3 | Li-Mg | 1 | - | 1 | 76 | 124 |
| A4-2 | Zn | 0.74 | 1.65 | 1 | 1.3 | Li-Mg-Al | 1 | 1 | 2 | 73 | 127 |
| B5-1 | Zr | 0.80 | 1.33 | 1 | 1.2 | Li | - | - | - | 102 | 98 |
| B5-2 | Zr | 0.80 | 1.33 | 1 | 1.2 | Li-Al | - | 1 | 1 | 100 | 100 |
| A5-1 | Zr | 0.80 | 1.33 | 1 | 1.2 | Li-Mg | 1 | - | 1 | 78 | 122 |
| A5-2 | Zr | 0.80 | 1.33 | 1 | 1.2 | Li-Mg-Al | 1 | 1 | 2 | 75 | 125 |
| B6-1 | Nb | 0.70 | 1.11 | 1 | 1.4 | Li | - | - | - | 104 | 96 |
| B6-2 | Nb | 0.70 | 1.11 | 1 | 1.4 | Li-Al | - | 1 | 1 | 102 | 98 |
| A6-1 | Nb | 0.70 | 1.11 | 1 | 1.4 | Li-Mg | 1 | - | 1 | 80 | 120 |
| A6-2 | Nb | 0.70 | 1.11 | 1 | 1.4 | Li-Mg-Al | 1 | 1 | 2 | 77 | 123 |

**[Table 4]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A1-3 | Mg | 0.65 | 1.31 | 1 | 0.95 | Li-Mg | 0.01 | - | 0.01 | 96 | 104 |
| A1-4 | Mg | 0.65 | 1.31 | 1 | 0.95 | Li-Mg | 0.2 | - | 0.2 | 89 | 111 |
| A1-5 | Mg | 0.65 | 1.31 | 1 | 0.95 | Li-Mg | 0.5 | - | 0.5 | 81 | 119 |
| A1-1 | Mg | 0.65 | 1.31 | 1 | 0.95 | Li-Mg | 1 | - | 1 | 78 | 122 |
| A1-6 | Mg | 0.65 | 1.31 | 1 | 0.95 | Li-Mg | 2 | - | 2 | 80 | 120 |
| Al-7 | Mg | 0.65 | 1.31 | 1 | 0.95 | Li-Mg | 5 | - | 5 | 86 | 114 |
| A1-8 | Mg | 0.65 | 1.31 | 1 | 0.95 | Li-Mg | 10 | - | 10 | 95 | *105* |
| B1-3 | Mg | 0.65 | 1.31 | 1 | 0.95 | Li-Mg | 12 | - | 12 | *105* | 95 |
| A1-9 | Mg | 0.65 | 1.31 | 1 | 0.95 | Li-Mg-Al | 0.01 | 0.01 | 0.02 | 90 | 110 |
| Al-10 | Mg | 0.65 | 1.31 | 1 | 0.95 | Li-Mg-Al | 0.1 | 0.1 | 0.2 | 83 | 117 |
| A1-2 | Mg | 0.65 | 1.31 | 1 | 0.95 | Li-Mg-Al | 1 | 1 | 2 | 75 | 125 |
| Al-11 | Mg | 0.65 | 1.31 | 1 | 0.95 | Li-Mg-Al | 2 | 2 | 4 | 78 | 122 |
| Al-12 | Mg | 0.65 | 1.31 | 1 | 0.95 | Li-Mg-Al | 5 | 5 | 10 | 89 | 111 |
| B1-4 | Mg | 0.65 | 1.31 | 1 | 0.95 | Li-Mg-Al | 8 | 4 | 12 | 107 | 93 |
| B1-5 | Mg | 0.65 | 1.31 | 1 | 0.95 | Li-Mg-Al | 4 | 8 | 12 | 109 | 91 |

**[Table 5]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A2-3 | Al | 0.50 | 1.61 | 1 | 0.84 | Li-Mg | 0.01 | - | 0.01 | 95 | 105 |
| A2-4 | Al | 0.50 | 1.61 | 1 | 0.84 | Li-Mg | 0.2 | - | 0.2 | 88 | 112 |
| A2-5 | Al | 0.50 | 1.61 | 1 | 0.84 | Li-Mg | 0.5 | - | 0.5 | 80 | 120 |
| A2-1 | Al | 0.50 | 1.61 | 1 | 0.84 | Li-Mg | 1 | - | 1 | 77 | 123 |
| A2-6 | Al | 0.50 | 1.61 | 1 | 0.84 | Li-Mg | 2 | - | 2 | 79 | 121 |
| A2-7 | Al | 0.50 | 1.61 | 1 | 0.84 | Li-Mg | 5 | - | 5 | 85 | 115 |
| A2-8 | Al | 0.50 | 1.61 | 1 | 0.84 | Li-Mg | 10 | - | 10 | 94 | 106 |
| B2-3 | Al | 0.50 | 1.61 | 1 | 0.84 | Li-Mg | 12 | - | 12 | 104 | 96 |
| A2-9 | Al | 0.50 | 1.61 | 1 | 0.84 | Li-Mg-Al | 0.01 | 0.01 | 0.02 | 89 | 111 |
| A2-10 | Al | 0.50 | 1.61 | 1 | 0.84 | Li-Mg-Al | 0.1 | 0.1 | 0.2 | 82 | 118 |
| A2-2 | Al | 0.50 | 1.61 | 1 | 0.84 | Li-Mg-Al | 1 | 1 | 2 | 74 | 126 |
| A2-11 | Al | 0.50 | 1.61 | 1 | 0.84 | Li-Mg-Al | 2 | 2 | 4 | 77 | 123 |
| A2-12 | Al | 0.50 | 1.61 | 1 | 0.84 | Li-Mg-Al | 5 | 5 | 10 | 88 | 112 |
| B2-4 | Al | 0.50 | 1.61 | 1 | 0.84 | Li-Mg-Al | 8 | 4 | 12 | 106 | 94 |
| B2-5 | Al | 0.50 | 1.61 | 1 | 0.84 | Li-Mg-Al | 4 | 8 | 12 | 108 | 92 |

**[Table 6]**

| Battery | Positive electrode (positive electrode mixture) | | | | | Negative electrode | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A3-3 | Ti | 0.68 | 1.54 | 1 | 0.95 | Li-Mg | 0.01 | - | 0.01 | 95 | *105* |
| A3-4 | Ti | 0.68 | 1.54 | 1 | 0.95 | Li-Mg | 0.2 | - | 0.2 | 90 | 110 |
| A3-5 | Ti | 0.68 | 1.54 | 1 | 0.95 | Li-Mg | 0.5 | - | 0.5 | 82 | 118 |
| A3-1 | Ti | 0.68 | 1.54 | 1 | 0.95 | Li-Mg | 1 | - | 1 | 79 | 121 |
| A3-6 | Ti | 0.68 | 1.54 | 1 | 0.95 | Li-Mg | 2 | - | 2 | 81 | 119 |
| A3-7 | Ti | 0.68 | 1.54 | 1 | 0.95 | Li-Mg | 5 | - | 5 | 87 | 113 |
| A3-8 | Ti | 0.68 | 1.54 | 1 | 0.95 | Li-Mg | 10 | - | 10 | 96 | 104 |
| B3-3 | Ti | 0.68 | 1.54 | 1 | 0.95 | Li-Mg | 12 | - | 12 | 106 | 94 |
| A3-9 | Ti | 0.68 | 1.54 | 1 | 0.95 | Li-Mg-Al | 0.01 | 0.01 | 0.02 | 89 | 111 |
| A3-10 | Ti | 0.68 | 1.54 | 1 | 0.95 | Li-Mg-Al | 0.1 | 0.1 | 0.2 | 84 | 116 |
| A3-2 | Ti | 0.68 | 1.54 | 1 | 0.95 | Li-Mg-Al | 1 | 1 | 2 | 76 | 124 |
| A3-11 | Ti | 0.68 | 1.54 | 1 | 0.95 | Li-Mg-Al | 2 | 2 | 4 | 79 | 121 |
| A3-12 | Ti | 0.68 | 1.54 | 1 | 0.95 | Li-Mg-Al | 5 | 5 | 10 | 90 | 110 |
| B3-4 | Ti | 0.68 | 1.54 | 1 | 0.95 | Li-Mg-Al | 8 | 4 | 12 | 108 | 92 |
| B3-5 | Ti | 0.68 | 1.54 | 1 | 0.95 | Li-Mg-Al | 4 | 8 | 12 | 110 | 90 |

**[Table 7]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A4-3 | Zn | 0.74 | 1.65 | 1 | 1.3 | Li-Mg | 0.01 | - | 0.01 | 94 | 106 |
| A4-4 | Zn | 0.74 | 1.65 | 1 | 1.3 | Li-Mg | 0.2 | - | 0.2 | 87 | 113 |
| A4-5 | Zn | 0.74 | 1.65 | 1 | 1.3 | Li-Mg | 0.5 | - | 0.5 | 79 | 121 |
| A4-1 | Zn | 0.74 | 1.65 | 1 | 1.3 | Li-Mg | 1 | - | 1 | 76 | 124 |
| A4-6 | Zn | 0.74 | 1.65 | 1 | 1.3 | Li-Mg | 2 | - | 2 | 78 | 122 |
| A4-7 | Zn | 0.74 | 1.65 | 1 | 1.3 | Li-Mg | 5 | - | 5 | 84 | 116 |
| A4-8 | Zn | 0.74 | 1.65 | 1 | 1.3 | Li-Mg | 10 | - | 10 | 93 | 107 |
| B4-3 | Zn | 0.74 | 1.65 | 1 | 1.3 | Li-Mg | 12 | - | 12 | 103 | 97 |
| A4-9 | Zn | 0.74 | 1.65 | 1 | 1.3 | Li-Mg-Al | 0.01 | 0.01 | 0.02 | 88 | 112 |
| A4-10 | Zn | 0.74 | 1.65 | 1 | 1.3 | Li-Mg-Al | 0.1 | 0.1 | 0.2 | 81 | 119 |
| A4-2 | Zn | 0.74 | 1.65 | 1 | 1.3 | Li-Mg-Al | 1 | 1 | 2 | 73 | 127 |
| A4-11 | Zn | 0.74 | 1.65 | 1 | 1.3 | Li-Mg-Al | 2 | 2 | 4 | 76 | 124 |
| A4-12 | Zn | 0.74 | 1.65 | 1 | 1.3 | Li-Mg-Al | 5 | 5 | 10 | 87 | 113 |
| B4-4 | Zn | 0.74 | 1.65 | 1 | 1.3 | Li-Mg-Al | 8 | 4 | 12 | *105* | 95 |
| B4-5 | Zn | 0.74 | 1.65 | 1 | 1.3 | Li-Mg-Al | 4 | 8 | 12 | 107 | 93 |

**[Table 8]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| AS-3 | Zr | 0.80 | 1.33 | 1 | 1.2 | Li-Mg | 0.01 | - | 0.01 | 95 | 105 |
| A5-4 | Zr | 0.80 | 1.33 | 1 | 1.2 | Li-Mg | 0.2 | - | 0.2 | 89 | 111 |
| A5-5 | Zr | 0.80 | 1.33 | 1 | 1.2 | Li-Mg | 0.5 | - | 0.5 | 81 | 119 |
| A5-1 | Zr | 0.80 | 1.33 | 1 | 1.2 | Li-Mg | 1 | - | 1 | 78 | 122 |
| A5-6 | Zr | 0.80 | 1.33 | 1 | 1.2 | Li-Mg | 2 | - | 2 | 80 | 120 |
| A5-7 | Zr | 0.80 | 1.33 | 1 | 1.2 | Li-Mg | 5 | - | 5 | 86 | 114 |
| A5-8 | Zr | 0.80 | 1.33 | 1 | 1.2 | Li-Mg | 10 | - | 10 | 95 | 105 |
| B5-3 | Zr | 0.80 | 1.33 | 1 | 1.2 | Li-Mg | 12 | - | 12 | 105 | 95 |
| A5-9 | Zr | 0.80 | 1.33 | 1 | 1.2 | Li-Mg-Al | 0.01 | 0.01 | 0.02 | 90 | 110 |
| A5-10 | Zr | 0.80 | 1.33 | 1 | 1.2 | Li-Mg-Al | 0.1 | 0.1 | 0.2 | 83 | 117 |
| A5-2 | Zr | 0.80 | 1.33 | 1 | 1.2 | Li-Mg-Al | 1 | 1 | 2 | 75 | 125 |
| A5-11 | Zr | 0.80 | 1.33 | 1 | 1.2 | Li-Mg-Al | 2 | 2 | 4 | 78 | 122 |
| A5-12 | Zr | 0.80 | 1.33 | 1 | 1.2 | Li-Mg-Al | *5* | *5* | 10 | 89 | 111 |
| B54 | Zr | 0.80 | 1.33 | 1 | 1.2 | Li-Mg-Al | 8 | 4 | 12 | 107 | 93 |
| B5-5 | Zr | 0.80 | 1.33 | 1 | 1.2 | Li-Mg-Al | 4 | 8 | 12 | 109 | 91 |

**[Table 9]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A6-3 | Nb | 0.70 | 1.60 | 1 | 1.1 | Li-Mg | 0.01 | - | 0.01 | 96 | 104 |
| A6-4 | Nb | 0.70 | 1.60 | 1 | 1.1 | Li-Mg | 0.2 | - | 0.2 | 91 | 109 |
| A6-5 | Nb | 0.70 | 1.60 | 1 | 1.1 | Li-Mg | 0.5 | - | 0.5 | 83 | 117 |
| A6-1 | Nb | 0.70 | 1.60 | 1 | 1.1 | Li-Mg | 1 | - | 1 | 80 | 120 |
| A6-6 | Nb | 0.70 | 1.60 | 1 | 1.1 | Li-Mg | 2 | - | 2 | 82 | 118 |
| A6-7 | Nb | 0.70 | 1.60 | 1 | 1.1 | Li-Mg | 5 | - | 5 | 88 | 112 |
| A6-8 | Nb | 0.70 | 1.60 | 1 | 1.1 | Li-Mg | 10 | - | 10 | 96 | 104 |
| B6-3 | Nb | 0.70 | 1.60 | 1 | 1.1 | Li-Mg | 12 | - | 12 | 107 | 93 |
| A6-9 | Nb | 0.70 | 1.60 | 1 | 1.1 | Li-Mg-Al | 0.01 | 0.01 | 0.02 | 90 | 110 |
| A6-10 | Nb | 0.70 | 1.60 | 1 | 1.1 | Li-Mg-Al | 0.1 | 0.1 | 0.2 | 85 | 115 |
| A6-2 | Nb | 0.70 | 1.60 | 1 | 1.1 | Li-Mg-Al | 1 | 1 | 2 | 77 | 123 |
| A6-11 | Nb | 0.70 | 1.60 | 1 | 1.1 | Li-Mg-Al | 2 | 2 | 4 | 80 | 120 |
| A6-12 | Nb | 0.70 | 1.60 | 1 | 1.1 | Li-Mg-Al | 5 | 5 | 10 | 91 | 109 |
| B6-4 | Nb | 0.70 | 1.60 | 1 | 1.1 | Li-Mg-Al | 8 | 4 | 12 | 109 | 91 |
| B6-5 | Nb | 0.70 | 1.60 | 1 | 1.1 | Li-Mg-Al | 4 | 8 | 12 | 111 | 89 |

**[Table 10]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| B1-6 | Mg | 0.65 | 1.31 | 0.05 | 0.05 | Li-Mg | 0.5 | - | 0.5 | 102 | 98 |
| A1-13 | Mg | 0.65 | 1.31 | 0.1 | 0.095 | Li-Mg | 0.5 | - | 0.5 | 90 | 110 |
| A1-14 | Mg | 0.65 | 1.31 | 0.5 | 0.48 | Li-Mg | 0.5 | - | 0.5 | 86 | 114 |
| Al-5 | Mg | 0.65 | 1.31 | 1 | 0.95 | Li-Mg | 0.5 | - | 0.5 | 81 | 119 |
| A1-15 | Mg | 0.65 | 1.31 | 2 | 1.9 | Li-Mg | 0.5 | - | 0.5 | 85 | 115 |
| Al-16 | Mg | 0.65 | 1.31 | 5 | 4.8 | Li-Mg | 0.5 | - | 0.5 | 93 | 107 |
| B1-7 | Mg | 0.65 | 1.31 | 6 | 5.7 | Li-Mg | 0.5 | - | 0.5 | 105 | 95 |
| B2-6 | Al | 0.50 | 1.61 | 0.05 | 0.04 | Li-Mg | 0.5 | - | 0.5 | 101 | 99 |
| A2-13 | Al | 0.50 | 1.61 | 0.1 | 0.08 | Li-Mg | 0.5 | - | 0.5 | 89 | 111 |
| A2-14 | Al | 0.50 | 1.61 | 0.5 | 0.42 | Li-Mg | 0.5 | - | 0.5 | 85 | 115 |
| A2-5 | Al | 0.50 | 1.61 | 1 | 0.84 | Li-Mg | 0.5 | - | 0.5 | 80 | 120 |
| A2-15 | Al | 0.50 | 1.61 | 2 | 1.7 | Li-Mg | 0.5 | - | 0.5 | 84 | 116 |
| A2-16 | Al | 0.50 | 1.61 | 5 | 4.2 | Li-Mg | 0.5 | - | 0.5 | 92 | 108 |
| B2-7 | Al | 0.50 | 1.61 | 6 | 5.0 | Li-Mg | 0.5 | - | 0.5 | 104 | 96 |

**[Table 11]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| B3-6 | Ti | 0.68 | 1.54 | 0.05 | 0.05 | Li-Mg | 0.5 | - | 0.5 | 103 | 97 |
| A3-13 | Ti | 0.68 | 1.54 | 0.1 | 0.095 | Li-Mg | 0.5 | - | 0.5 | 91 | 109 |
| A3-14 | Ti | 0.68 | 1.54 | 0.5 | 0.47 | Li-Mg | 0.5 | - | 0.5 | 87 | 113 |
| A3-5 | Ti | 0.68 | 1.54 | 1 | 0.95 | Li-Mg | 0.5 | - | 0.5 | 82 | 118 |
| A3-15 | Ti | 0.68 | 1.54 | 2 | 1.90 | Li-Mg | 0.5 | - | 0.5 | 86 | 114 |
| A3-16 | Ti | 0.68 | 1.54 | 5 | 4.7 | Li-Mg | 0.5 | - | 0.5 | 94 | 106 |
| B3-7 | Ti | 0.68 | 1.54 | 6 | 5.7 | Li-Mg | 0.5 | - | 0.5 | 106 | 94 |
| B4-6 | Zn | 0.74 | 1.65 | 0.05 | 0.06 | Li-Mg | 0.5 | - | 0.5 | 100 | 100 |
| A4-13 | Zn | 0.74 | 1.65 | 0.1 | 0.13 | Li-Mg | 0.5 | - | 0.5 | 88 | 112 |
| A4-14 | Zn | 0.74 | 1.65 | 0.5 | 0.64 | Li-Mg | 0.5 | - | 0.5 | 84 | 116 |
| A4-5 | Zn | 0.74 | 1.65 | 1 | 1.3 | Li-Mg | 0.5 | - | 0.5 | 79 | 121 |
| A4-15 | Zn | 0.74 | 1.65 | 2 | 2.5 | Li-Mg | 0.5 | - | 0.5 | 83 | 117 |
| A4-16 | Zn | 0.74 | 1.65 | 5 | 6.4 | Li-Mg | 0.5 | - | 0.5 | 91 | 109 |
| B4-7 | Zn | 0.74 | 1.65 | 6 | 7.6 | Li-Mg | 0.5 | - | 0.5 | 103 | 97 |

**[Table 12]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| B5-6 | Zr | 0.80 | 1.33 | 0.05 | 0.06 | Li-Mg | 0.5 | - | 0.5 | 102 | 98 |
| A5-13 | Zr | 0.80 | 1.33 | 0.1 | 0.12 | Li-Mg | 0.5 | - | 0.5 | 90 | 110 |
| A5-14 | Zr | 0.80 | 1.33 | 0.5 | 0.59 | Li-Mg | 0.5 | - | 0.5 | 86 | 114 |
| A5-5 | Zr | 0.80 | 1.33 | 1 | 1.2 | Li-Mg | 0.5 | - | 0.5 | 81 | 119 |
| A5-15 | Zr | 0.80 | 1.33 | 2 | 2.3 | Li-Mg | 0.5 | - | 0.5 | 85 | 115 |
| A5-16 | Zr | 0.80 | 1.33 | 5 | 5.9 | Li-Mg | 0.5 | - | 0.5 | 93 | 107 |
| B5-7 | Zr | 0.80 | 1.33 | 6 | 7.0 | Li-Mg | 0.5 | - | 0.5 | 105 | 95 |
| B6-6 | Nb | 0.70 | 1.60 | 0.05 | 0.06 | Li-Mg | 0.5 | - | 0.5 | 104 | 96 |
| A6-13 | Nb | 0.70 | 1.60 | 0.1 | 0.11 | Li-Mg | 0.5 | - | 0.5 | 92 | 108 |
| A6-14 | Nb | 0.70 | 1.60 | 0.5 | 0.55 | Li-Mg | 0.5 | - | 0.5 | 88 | 112 |
| A6-5 | Nb | 0.70 | 1.60 | 1 | 1.1 | Li-Mg | 0.5 | - | 0.5 | 83 | 117 |
| A6-15 | Nb | 0.70 | 1.60 | 2 | 2.2 | Li-Mg | 0.5 | - | 0.5 | 87 | 113 |
| A6-16 | Nb | 0.70 | 1.60 | 5 | 5.5 | Li-Mg | 0.5 | - | 0.5 | 95 | 105 |
| B6-7 | Nb | 0.70 | 1.60 | 6 | 6.6 | Li-Mg | 0.5 | - | 0.5 | 107 | 93 |

**[Table 13]**

| Battery | Positive electrode (positive electrode mixture) | | | | | Negative electrode (lithium alloy) | | | | Evaluation | |
|---|---|---|---|---|---|---|---|---|---|---|---|
| | metal Me | | | Amount of oxide of metal Me (part by mass) | Amount of metal Me (part by mass) | Foil composition | Mg content (% by mass) | Al content (% by mass) | Al + Mg content (% by mass) | Internal resistance after storage (relative value) | Pulsed discharge voltage after storage (relative value) |
| | Metal element | Ionic radius (Å) | Electronegativity | | | | | | | | |
| A7-1 | Mg | 0.65 | 1.31 | 1 | 0.95 | Li-Mg | 0.5 | - | 0.5 | 86 | 114 |
| | Zr | 0.80 | 1.33 | 1 | 1.2 | | | | | | |
| A7-2 | Al | 0.50 | 1.61 | 1 | 0.84 | Li-Mg | 0.5 | - | 0.5 | 84 | 116 |
| | Ti | 0.68 | 1.54 | 1 | 0.95 | | | | | | |
| A7-3 | Zn | 0.74 | 1.65 | 1 | 1.3 | Li-Mg | 0.5 | - | 0.5 | 84 | 116 |
| | Nb | 0.70 | 1.60 | 1 | 1.1 | | | | | | |

In the batteries A1-1 to A1-16, A2-1 to A2-16, A3-1 to A3-16, A4-1 to A4-16, A5-1 to A5-16, and A6-1 to A6-16, excellent storage characteristics were achieved (Tables 2 to 12).

In the batteries R1-1 to R1-3, B1-1 to B1-7, B2-1 to B2-7, B3-1 to B3-7, B4-1 to B4-7, B5-1 to B5-7, and B6-1 to B6-7, the storage characteristics deteriorated. In each of these batteries, either of both a negative electrode with a Li content of 88% by mass or less and an Mg content outside the range of 0.01 to 10% by mass and a positive electrode with a content of the oxide of the metal Me outside the range of 0.1 to 5 parts by mass was/were used.

In the batteries R2-1 to R2-3, R3-1 to R3-3, R4-1 to R4-3, and R5-1 to R5-3, the metal Me had an ionic radius greater than 0.8 Å and/or an electronegativity greater than 1.65, which degraded the storage characteristics.

In comparison of the batteries R1-1 to R1-3 in Table 1, where no oxide of a metal Me was added, the rise in the pulsed discharge voltage after the storage was smaller in the battery R1-3 using an Li-Mg foil than in the batteries R1-1 and R1-2 using an Li foil or an Li-Al foil (88 and 90 → 93). By contrast, in comparison of the batteries B1-1, B1-2, and A1-1 in Table 2, where the oxide of the metal Me was added and the metal Me was Mg, the pulsed discharge voltage after the storage was significantly increased in the battery A1-1 using an Li-Mg foil compared to the batteries B1-1 and B1-2 using an Li foil or an Li-Al foil (98 and 100 → 122). The same tendency as above was observed where the metal Me was Al, Ti, Zn, Zr, or Nb (Tables 2 and 3). It can be understood from the above that a remarkable improvement in storage characteristics can be achieved when an oxide of a metal Me is added to the positive electrode and an alloy containing Li and Mg is used for the negative electrode.

In comparison of the batteries B1-1, B1-2, Al-1, and A1-2 in Table 2, where the metal Me is Mg, the rise in the pulsed discharge voltage after the storage was smaller in the battery B1-2 using an Li-Al foil (Al content: 1% by mass) than in the battery B1-1 using an Li foil (98 → 100). By contrast, the pulsed discharge voltage was greatly increased as described above in the battery A1-1 using an Li-Mg foil (Mg content: 1% by mass), and the pulsed discharge voltage after the storage was further greatly increased in the battery A1-2 using an Li-Mg-Al foil (Mg content: 1% by mass, Al content: 1% by mass) (122 → 125). When the metal Me was Al, Ti, Zn, Zr, or Nb, the same tendency as described above was also observed (Tables 2 to 3).

Excellent storage characteristics were achieved also in the batteries A7-1 to A7-3, where the oxides of two types of metal Me were added (Table 13).

### [Industrial Applicability]

The lithium primary battery of the present disclosure is suitably used, for example, as a main power supply or a memory backup power supply of various meters (e.g., smart meters for electricity, water, and gas).

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

- 1: Positive electrode
- 1a: Positive electrode current collector
- 2: Negative electrode
- 3: Separator
- 4: Positive electrode lead
- 5: Negative electrode lead
- 6: Upper insulation plate
- 7: Lower insulation plate
- 8: Sealing plate
- 9: Battery case
- 10: Lithium primary battery

## Claims

1. A lithium primary battery comprising:
a positive electrode; a negative electrode; and a nonaqueous electrolyte,
wherein the positive electrode includes a positive electrode mixture,
the positive electrode mixture contains manganese dioxide and an oxide of a metal Me other than manganese,
the metal Me has a valence of 2 or more, an ionic radius of 0.8 Å or less, and an electronegativity of 1.65 or less,
an amount of the oxide of the metal Me contained in the positive electrode mixture is 0.1 parts by mass or more and 5 parts by mass or less relative to 100 parts by mass of the manganese dioxide contained in the positive electrode mixture,
the negative electrode includes an alloy containing lithium and magnesium,
a content of the lithium in the alloy is greater than 88% by mass, and
a content of the magnesium in the alloy is 0.01% by mass or more and 10% by mass or less.

2. The lithium primary battery according to claim 1,
wherein the alloy contains aluminum, and
a total content of the magnesium and the aluminum in the alloy is 0.02% by mass or more and 10% by mass or less.

3. The lithium primary battery according to claim 1,
wherein the metal Me includes at least one selected from the group consisting of magnesium, aluminum, titanium, zinc, zirconium, and niobium.

4. The lithium primary battery according to claim 1,
wherein a median value of particle diameters of the manganese dioxide is 5 µm or more and 40 µm or less.

5. The lithium primary battery according to claim 1,
wherein a BET specific surface area of the manganese dioxide is 5 m²/g or more and 40 m²/g or less.
